# NEUE EUROPÄISCHE PATENTSCHRIFT

(11) **EP 2 251 240 B2**
(45) Veröffentlichungstag und Bekanntmachung des Hinweises auf die Entscheidung über den Einspruch: **26.06.2019**
(45) Hinweis auf die Patenterteilung: 25.02.2015
(21) Anmeldenummer: 10005008.7
(22) Anmeldetag: 12.05.2010
(51) Int. Cl.: B60W 30/16, G08G 1/16, B60W 50/00, G01S 13/93, B60W 30/08

(54) **Verfahren zur automatischen Längsführung eines Kraftfahrzeugs umfassend ein adaptives Längsführungssystem (ACC-System)**
Method for automatic longitudinal guidance of a vehcile including Adaptive Cruise Control
Procédé de guidage longitudinal d'un véhicule comprenant Adaptive Cruise Control

(30) Priorität: 15.05.2009 DE 102009021476
(43) Veröffentlichungstag der Anmeldung: 17.11.2010
(73) Patentinhaber: Audi AG, 85045 Ingolstadt (DE)
(72) Erfinder: Staudte, Carmen, 85080 Gaimersheim (DE)
(74) Vertreter: Thielmann, Frank

(56) Entgegenhaltungen:
- EP-A2- 0 263 262
- WO-A1-2004/074030
- WO-A1-2007/045523
- WO-A1-2007/124704
- WO-A1-2008/061890
- DE-A1- 10 256 529
- DE-A1- 10 337 634
- DE-A1-102005 026 065
- DE-A1-102005 029 662
- DE-A1-102007 046 765
- DE-A1-102008 040 631

## Beschreibung

Die Erfindung betrifft ein Verfahren zur automatischen Längsführung eines Kraftfahrzeugs umfassend ein adaptives Längsführungssystem (ACC-System).

Ein adaptives Längsführungssystem, üblicherweise auch ACC-System (ACC=adaptive cruise control) dient der automatischen Längsführung des eigenen Kraftfahrzeugs bezogen auf ein unmittelbar vorausfahrendes Fahrzeug. Mittels geeigneter Sensoren, üblicherweise Radarsensoren, werden Informationen bezüglich dieses vorausfahrenden Fahrzeugs erfasst, üblicherweise zumindest der Ist-Abstand, wobei das eigene Fahrzeug unter Berücksichtigung der erfassten Informationen so beschleunigt bzw. abgebremst wird, dass in der Regel stets ein situationsabhängiger Mindestabstand gegeben bzw. eingehalten wird. Das eigene Fahrzeug kann auch bis in den Stand über das Längsführungssystem gebremst werden. Die Funktion eines solchen Längsführungs- oder ACC-Systems ist dem Grunde nach hinlänglich bekannt. Bei bekannten Systemen wird immer nur auf das direkt vorausfahrende Fahrzeug geregelt, das heißt, dass die Regelstrategie des Beschleunigungs- und Bremsverhaltens des eigenen Fahrzeugs stets unter Berücksichtigung des Abstands und gegebenenfalls weiterer Parameter bezüglich des direkt vorausfahrenden Fahrzeugs ermittelt wird. Dies führt insbesondere im Stop&Go-Verkehr im Standbereich oder im Stausituationen zu einer ungleichförmigen Fahrweise, die aus ständigem Beschleunigen und Bremsen besteht, was wiederum zu einer relativ uneffizienten Fahrweise mit gesteigertem Energieverbrauch, sei es Benzin/Diesel oder Strom, führt.

Die DE 102 56 529 A zeigt ein Verfahren zur automatischen Längsführung eines Kraftfahrzeugs umfassend ein adaptives Längsführungssystem (ACC-System), wobei seitens einer Steuerungseinrichtung des Längsführungssystems Informationen betreffend die Abstände zu mehreren vorausfahrenden Kraftfahrzeugen und betreffend die jeweiligen Geschwindigkeiten dieser erfasst werden und in Abhängigkeit der erfassten Informationen die Längsführung des Kraftfahrzeugs erfolgt.

Aus der Druckschrift WO 2004/074030 A1 ist ein Verfahren zur Regelung einer Fahrzeuggeschwindigkeit eines Fahrzeugs bekannt, bei dem eine zukünftige Verkehrssituation in Abhängigkeit der geregelten Beschleunigung des Fahrzeugs prädiziert und mit einer Kostenfunktion bewertet wird. Die Beschleunigung des Kraftfahrzeugs wird auf den Wert geregelt, für den die Kostenfunktion ihren Minimalwert annimmt.

Der Erfindung liegt damit das Problem zugrunde, ein Verfahren zur automatischen Längsführung anzugeben, das eine komfortablere und weniger Energie verbrauchende Längsführung ermöglicht.

Zur Lösung des Problems wird ein Verfahren gemäß Anspruch 1 angegeben.

Im Rahmen des erfindungsgemäßen Verfahrens wird zur Längsführung des eigenen Kraftfahrzeugs mit besonderem Vorteil das Verhalten nicht nur des unmittelbar vorausfahrenden Fahrzeugs, sondern mehrerer vorausfahrender Fahrzeuge erfasst, indem zu jedem der zur berücksichtigenden Kraftfahrzeuge der jeweilige Ist-Abstand zum eigenen Fahrzeug, die jeweilige Geschwindigkeit eines jeden Fahrzeugs sowie die jeweilige Beschleunigung eines jeden dieser Fahrzeuge erfasst wird. Es wird also vorausschauend das Kolonnenverhalten ermittelt, wobei die Kolonne aus mehreren vor dem eigenen Fahrzeug fahrenden Fahrzeugen, insbesondere wenigstens drei, vorzugsweise wenigstens fünf Kraftfahrzeuge, definiert wird. Dies führt dazu, dass das Verhalten weiterer Fahrzeuge, die sich weiter vor dem eigenen Fahrzeug befinden, und deren Verhalten ursächlich für das Verhalten des unmittelbar vor dem eigenen Fahrzeug befindlichen Fahrzeugs ist, in die Regelstrategie eingehen. Bremst beispielsweise das fünfte vorausfahrende Fahrzeug bereits wieder, während die Fahrzeuge eins bis vier noch beschleunigen, um Lücken zu schließen, so wird dies im Rahmen des erfindungsgemäßen Verfahrens erfasst. Hieraus wird zu einem sehr frühen Zeitpunkt bereits abgeleitet, dass in Kürze auch mit einem Bremsvorgang des unmittelbar davor fahrenden Fahrzeugs zu rechnen ist. Die Regelstrategie des eigenen Fahrzeugs wird derart angepasst, dass das eigene Fahrzeug nicht zu stark beschleunigt, sondern möglichst gleichförmig fährt und eher langsam und mit geringerer Dynamik den anderen Fahrzeugen folgt. Es werden also unnötige Beschleunigungs- oder Bremsvorgänge vermieden. Beschleunigt beispielsweise das dritte vorausfahrende Fahrzeug, während das unmittelbar und das zweite vor dem eigenen Fahrzeug befindliche Fahrzeug noch stehen, so ist mit einer unmittelbar folgenden Anfahrt beider Fahrzeuge zu rechnen. Rollt beispielsweise das eigene Fahrzeug noch an das unmittelbar davor befindliche Fahrzeug heran, so kann bei Vorliegen der Kenntnis, dass das dritte Fahrzeug bereits wieder anfährt, ein Bremsen in den Stand vermieden werden, sondern es wird wenn möglich gleichförmig verzögert und nach Erfassen des Anfahrens des unmittelbar davor befindlichen Fahrzeugs wieder langsam beschleunigt, ohne vollständig abzubremsen.

Ersichtlich bietet das erfindungsgemäße Verfahren infolge der Erfassung des "Kolonnenverhaltens" die Möglichkeit, wesentlich mehr Informationen in die Regelstrategie einzubeziehen, was es wiederum ermöglicht, unmittelbar bevorstehende Situationen zu erfassen respektive abzuleiten, die wiederum ursächlich für einen komfortablen und energiesparenden Regelbetrieb des eigenen Fahrzeugs sind. Der Abstand zum unmittelbar davor befindlichen Fahrzeug wird zwangsläufig nicht mehr gleich bleiben, da das Verhalten der weiter davor befindlichen Fahrzeuge eingeht, es ist insgesamt ein wesentlich sanfterer Regelverlauf möglich, der Brems- und Beschleunigungsvorgänge zu anderen Zeitpunkten und in anderen Intensitäten als bisher ermöglicht.

Wie bereits beschrieben, ist es zweckmäßig, die Informationen zu wenigstens drei, insbesondere zu wenigstens fünf vorausfahrenden Fahrzeugen zu erfassen, wenn möglich auch mehr, soweit dies die Erfassungsmittel zulassen.

Die Steuerung erfolgt zweckmäßigerweise derart, dass zum unmittelbar vorausfahrenden Kraftfahrzeug unabhängig von den erfassten Informationen immer in Mindestabstand eingehalten wird, der jedoch situationsabhängig variabel ist. Hierüber wird, wenn beispielsweise das eigene Kraftfahrzeug auf das unmittelbar davor befindliche stehende Fahrzeug aufrollt, jedoch bekannt ist, dass das zweite oder dritte davor befindliche Fahrzeug bereits wieder angefahren ist, vermieden, dass eine zu nahe Annäherung erfolgt, zumal ja nicht sichergestellt ist, dass der Fahrer des unmittelbar davor befindlichen Fahrzeugs auch unmittelbar anfährt.

Die Informationen können auf unterschiedliche Weise erfasst werden. Eine erste Erfindungsalternative sieht vor, die Informationen mittels kraftfahrzeugseitig vorgesehener Radarsensoren aufzunehmen. Radarsensoren haben einen Erfassungsbereich von ca. 100 - 200 m. Es hat sich herausgestellt, dass es ohne Weiteres möglich ist, auch Informationen respektive Reflexionssignale von zweiten, dritten, vierten oder fünften vorausfahrenden Fahrzeugen aufzunehmen, nachdem die Radarsignale zum Teil auch unter den einzelnen Fahrzeugen geführt werden, das heißt, dass sie durch dazwischen befindliche Fahrzeuge nicht abgeschirmt werden. Die Steuerungseinrichtung ist im Stande, die einzelnen Signale selbstverständlich fahrzeugspezifisch zu differenzieren, mithin also dem jeweiligen zweiten, dritten, vierten etc. Fahrzeug zuzuordnen.

Alternativ zur Verwendung von Radarsensoren oder zusätzlich hierzu ist es auch möglich, eine kraftfahrzeugseitig vorgesehene Empfangseinrichtung zu nutzen, die eine Kommunikation zu einer externen Informationsübertragungseinrichtung ermöglicht. Eine solche Kommunikation wäre beispielsweise eine Car-To-Car-Kommunikation. Hierunter versteht man quasi ein WLAN-System, also ein Kommunikationssystem, über welches Fahrzeuge unmittelbar miteinander kommunizieren können, wenn sie im jeweiligen Signalübertragungsbereich sind. Die Kraftfahrzeuge, die hierzu in der Lage sind, verfügen über kombinierte Sende- und Empfangseinrichtungen, die die Datenübertragung ermöglichen. Hiermit ist es also möglich, dass das eigene Fahrzeug über seine Empfangseinrichtung die Informationen von den vorausfahrenden Fahrzeugen unmittelbar erhält. Diese Fahrzeuge "kennen" selbstverständlich ihre eigene Geschwindigkeit sowie ihr eigenes Beschleunigungsverhalten und können ohne Weiteres die entsprechenden Parameter, sei es die Geschwindigkeit oder Motorsteuerungsparameter etc., die dies angeben, übertragen. Auch ist in der Regel jeweils die eigene Ist-Position bekannt, nachdem moderne Fahrzeuge stets über Navigationssysteme mit entsprechender Satellitenkommunikation verfügen. Denkbar ist natürlich auch eine Kommunikation via Satellit zur Datenübertragung.

Im Rahmen der Informationsverarbeitung wird anhand der erfassten Information betreffend die jeweilige Geschwindigkeit der vorausfahrenden Kraftfahrzeuge auch ein Rechenwert, der ein Maß für die Bewegung der aus den vorausfahrenden Kraftfahrzeugen gebildeten Kolonne ist, ermittelt, der im Rahmen der Steuerung berücksichtigt wird. Dieser Rechenwert ist der Mittelwert. Hierüber wird ermittelt, wie schnell sich die Kolonne im Mittel bewegt.

Weiterhin ist es zweckmäßig, wenn anhand wenigstens einer Information, die ein Maß für die zukünftige Fahrstrecke des eigenen Kraftfahrzeugs darstellt, die zukünftige Fahrstrecke und daraus resultierend ein Streckenkorridor ermittelt wird, in dem sich die vorausfahrenden Kraftfahrzeuge befinden. Wird hierüber frühzeitig erkannt, dass das eigene Fahrzeug in Kürze eine Kurve befährt, so kann der Erfassungs- und Auswertealgorithmus z. B. der Radarsignale angepasst werden, nachdem sich die Relativposition der einzelnen Kraftfahrzeuge bezüglich des eigenen Fahrzeugs infolge der Kurvenfahrt verändert. Auch ist es denkbar, sofern verstellbare Sensoren vorliegen, diese leicht zu verschwenken, um der anstehenden Kurve zu folgen. Aus der Ermittlung des Streckenkorridors, der auch als "Schlauch" bezeichnet werden kann, kann weiterhin ermittelt werden, welche Fahrzeuge in die Erfassung eingehen sollen. Als Informationen, die der Erfassung der zukünftigen strecke und daraus resultierend des Streckenkorridors dienen, können Betriebsparameter des eigenen Kraftfahrzeugs, insbesondere die Gierrate, oder der Radwinkel, dienen, wie alternativ oder zusätzlich auch prädikative Streckendaten, die beispielsweise von einer Navigations-CD ermittelt werden können, sowie alternativ oder zusätzlich auch Bilddaten, die mittels einer das Fahrzeugvorfeld erfassenden Kamera aufgenommen werden. Grundsätzlich dienlich sind also alle Informationen, die in irgendeiner Weise den Streckenverlauf abbilden.

Um einen reduzierten Kraftfahrzeugverbrauch nicht nur dadurch zu erhalten, dass moderater gebremst oder beschleunigt wird, sieht eine Weiterbildung der Erfindung vor, dass die Steuerung des Kraftfahrzeugs über das Längsführungssystem im Falle einer Beschleunigung unter Berücksichtigung des beschleunigungsbedingten Schadstoffausstoßes, insbesondere des CO₂-Ausstoßes erfolgt. Das Längsführungssystem greift bekanntlich in die Motorsteuerung ein. Der Motor wird nun derart gesteuert, dass die Beschleunigung so erfolgt, dass ein möglichst geringer Schadstoffausstoß gegeben ist, wozu die entsprechende Motorkennlinie gewählt wird. Das heißt, dass das Längsführungssystem in Verbindung mit der Motorsteuerung nur ein geringeres Drehmoment anfordert, das in Verbindung mit der bekannten Steuerkennlinie zu einem möglichst geringen Schadstoffausstoß führt.

In Weiterbildung kann die Steuerung des Kraftfahrzeugs über das Längsführungssystem auch unter Berücksichtigung des Fahrbahnverlaufs erfolgen. Dieser Erfindungsausgestaltung liegt der Gedanke zugrunde, dass Fahrbahngefälle für etwaige Beschleunigungsvorgänge oder für das Anrollen genutzt werden können, um die Beschleunigung über den eigenen Motor weiter zu reduzieren. Steigungen können genutzt werden, wenn gebremst werden soll, wobei grundsätzlich das eigene Motorschleppmoment soweit wie möglich ausgenutzt werden soll, um das Fahrzeug zu verzögern. Informationen über den Fahrbahnverlauf können aus der Navigations-CD ermittelt werden.

Neben dem Verfahren betrifft die Erfindung ferner ein Kraftfahrzeug nach Anspruch 9, umfassend ein adaptives Längsführungssystem mit einer Steuerungseinrichtung, welches Kraftfahrzeug respektive welches Längsführungssystem zur Durchführung des bestimmten Verfahren ausgebildet ist. Hierzu sind seitens der Steuerungseinrichtung Informationen betreffend die Abstände zu mehreren vorausfahrenden Kraftfahrzeugen, betreffend die jeweiligen Geschwindigkeiten dieser Kraftfahrzeuge und die jeweilige Beschleunigung dieser Kraftfahrzeuge erfassbar, wobei das Kraftfahrzeug in Abhängigkeit der erfassten Informationen sowie der erfassten Beschleunigungen steuerbar ist.

Die Steuerungseinrichtung verarbeitet sämtliche gegebenen Informationen und steuert folglich in Abhängigkeit des Verarbeitungsergebnisses, wozu steuerungseinrichtungsseitig selbstverständlich ein entsprechender Rechenalgorithmus vorhanden ist.

Die Steuerungseinrichtung selbst ist zur differenzierten Erfassung von Informationen zu wenigsten drei, insbesondere zu wenigstens fünf vorausfahrenden Kraftfahrzeugen ausgebildet sowie ferner dazu, dass zum unmittelbar vorausfahrenden Kraftfahrzeug unabhängig von den erfassten Informationen immer ein Mindestabstand eingehalten wird.

Zur Ermittlung der Informationen sind kraftfahrzeugseitig entweder Radarsensoren oder alternativ oder zusätzlich eine Empfangseinrichtung, die eine Kommunikation zu einer externen Informationsübertragungseinrichtung, also beispielsweise im Rahmen einer Car-to-Car-Kommunikation ermöglicht, vorgesehen.

Weiterhin ist die Steuerungseinrichtung dazu ausgebildet, die zukünftige Fahrstrecke und daraus resultierend einen Streckenkorridor, in dem sich die vorausfahrenden Kraftfahrzeuge befinden, anhand wenigstens einer Information, die ein Maß für die zukünftige Fahrstrecke des Fahrzeugs darstellt, zu ermitteln. Als eine solche Information kann wenigstens ein Betriebsparameter des eigenen Kraftfahrzeugs, insbesondere die Gierrate oder der Radlenkwinkel der Vorderräder, und/oder prädikative Streckendaten einer Navigations-CD und/oder mittels einer das Fahrzeugvorfeld erfassenden Kamera aufgenommene Bilddaten verwendet und verarbeitet werden.

Weitere Vorteile, Merkmale und Einzelheiten der Erfindung ergeben sich aus dem im Folgenden beschriebenen Ausführungsbeispiel sowie anhand der Zeichnungen. Dabei zeigen:
- Fig. 1: eine Prinzipdarstellung eines erfindungsgemäßen Kraftfahrzeugs, und
- Fig. 2: eine Prinzipdarstellung einer Verkehrssituation sowie der Informationserfassung zur Erläuterung des Verfahrens.

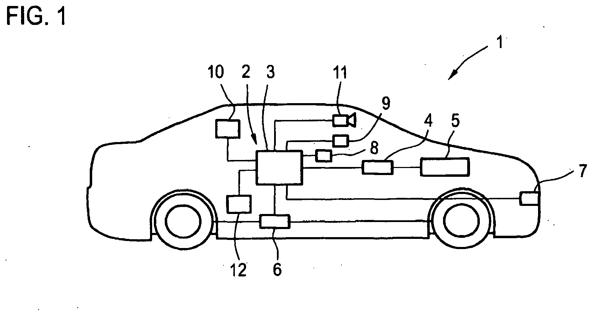

Fig. 1 zeigt ein erfindungsgemäßes Kraftfahrzeug 1, umfassend ein Fahrerassistenzsystem in Form eines adaptiven Längsführungssystems 2 mit einer Steuerungseinrichtung 3. Über die Steuerungseinrichtung 3 kann im Rahmen der Längsführung das Motorsteuergerät 4, über das der Motor 5 gesteuert wird, sowie das Bremssystemsteuergerät 6, über das die Bremsen gesteuert werden, je nach vorzunehmender Maßnahme angesteuert werden, um das Kraftfahrzeug 1 in Bezug auf das Verhalten eines vorausfahrenden Fahrzeugs zu regeln, also gezielt zu beschleunigen oder zu verzögern, und gegebenenfalls bis in den Stand zu bremsen.

Um Informationen zu ermitteln, gestützt auf welche die Steuerungseinrichtung 3 die jeweilige Regelstrategie ermittelt, sind im gezeigten Beispiel Sensoren, beispielsweise Radarsensoren 7 vorgesehen, die mit der Steuerungseinrichtung 3 kommunizieren und über die Signale gesendet und von vorausfahrenden Fahrzeugen wieder zurückreflektierte Signale empfangen werden. Aus diesen Reflexionssignalen kann seitens der Sensoren 7 oder seitens der Steuerungseinrichtung 3 ermittelt werden, wieweit das vorausfahrende Fahrzeug vom eigenen Fahrzeug entfernt ist, wie dessen Geschwindigkeit ist sowie das aktuelle Beschleunigungs- oder Bremsverhalten.

Alternativ oder zusätzlich zur Informationserfassung über die Radarsensoren 7 verfügt das Fahrerassistenzsystem 2 über eine Sende- und Empfangseinrichtung 8, über die eine Car-to-Car-Kommunikation möglich ist. Hierüber können entsprechende Informationen bezüglich Abstand, Geschwindigkeit und Beschleunigungsverhalten anderer Kraftfahrzeuge über ein aufgebautes WLAN-Netz unmittelbar von Fahrzeug zu Fahrzeug übertragen werden. Diese Art der Informationsübermittlung kann zusätzlich zu den Sensoren 7 sein, oder als echte Alternative. Auch hierüber können also die Informationen, die der Regelstrategie zugrunde liegen, erfasst werden.

Weiterhin ist vorgesehen, dass die Steuerungseinrichtung 3 diverse weitere Informationen erhält, beispielsweise eine Geschwindigkeitsinformation über den fahrzeugseitigen Tachometer 9, Informationen von einem Navigationssystem 10, aus dem der aktuelle Fahrbahnverlauf abgeleitet wird, Informationen von einer Kamera 11, die das Fahrzeugvorfeld aufnimmt und Bilddaten zur Verfügung stellt, oder Informationen von einem Sensor 12, beispielsweise einem Radlenkwinkelsensor oder einem Gierratensensor.

Mittels der Informationen aus dem Navigationssystem 10 können Daten betreffend etwaige Fahrstreckengefälle oder Steigungen ermittelt werden, die im Rahmen der Regelstrategie dazu genutzt werden können, im Falle einer Beschleunigung das etwaige Gefälle zusätzlich auszunutzen oder im Falle eines vorzunehmenden Abbremsens eine gegebene etwaige Steigung zusätzlich zu nutzen, um das Fahrzeug zu verzögern.

Mittels der Bilddaten der Kamera 11 und/oder den Informationen des Sensors 12 ist es möglich, die zukünftige befahrene Fahrspur zu bestimmen, also beispielsweise zu ermitteln, ob das eigene Fahrzeug soeben in eine Kurve fährt oder eine solche kurz bevorsteht. Denn diese Information ist wichtig, um einen Streckenkorridor zu definieren, indem sich diejenigen Fahrzeuge, die im Rahmen des erfindungsgemäßen Verfahrens zur Informationsermittlung überwacht werden sollen, befinden und den entsprechenden eigenen Informationsaufnahmemodus entsprechend zu konfigurieren respektive beispielsweise die Radarsensoren entsprechend zu verstellen etc.

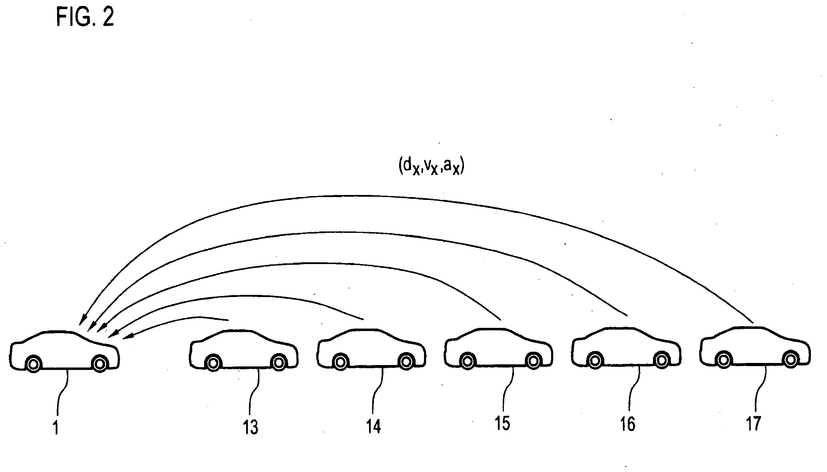

Fig. 2 zeigt lediglich als Prinzipskizze eine gegebene Verkehrssituation, wobei zum einen das erfindungsgemäße Kraftfahrzeug 1 dargestellt ist, sowie fünf weitere Kraftfahrzeuge 13, 14, 15, 16 und 17, die dem eigenen Kraftfahrzeug vorausfahren. Das eigene Kraftfahrzeug 1 ermittelt nun zu jedem der Kraftfahrzeuge 13 - 17 kraftfahrzeugspezifische Informationen, nämlich zum einen den Abstand des eigenen Kraftfahrzeugs 1 zu jedem dieser Fahrzeuge, wobei der Abstand in Fig. 2 mit dₓ angegeben ist, mit x = 13 - 17, ferner die jeweilige Ist-Geschwindigkeit jedes der Kraftfahrzeuge 13 - 17, in der Figur angegeben mit vₓ, sowie die aktuelle Beschleunigung jedes der Kraftfahrzeuge 13 - 17, angegeben mit aₓ, wobei die Beschleunigung selbstverständlich auch negativ sein kann, das jeweilige Fahrzeug mithin also bremst.

Die Informationsermittlung erfolgt bevorzugt, weil in modernen Kraftfahrzeugen vorhanden, über die Radarsensoren 7, wobei die Radarsignale und die entsprechenden Reflektionssignale auch von den weiter vorne stehenden Fahrzeugen empfangen beziehungsweise reflektiert werden können, auch wenn dazwischen ein oder mehrere Fahrzeuge sind. Die Signale "wandern" unterhalb der Fahrzeuge und können so störungsfrei erfasst werden. Sofern das eine oder andere Kraftfahrzeug 13 - 17 über eine entsprechende Sende- oder Empfangseinrichtung zur Car-to-Car-Kommunikation verfügt, können die Informationen auch hierüber übertragen werden.

Die Steuerungseinrichtung 3 empfängt also zu jedem der Kraftfahrzeuge 13 - 17 die entsprechenden Informationspakete, die differenziert und fahrzeugspezifisch erfasst werden. Das heißt, dass der Steuerungseinrichtung 3 das Verhalten der einzelnen Fahrzeuge dieser gesamten von den Fahrzeugen 13 - 17 gebildeten Kolonne bekannt ist, und nicht nur wie üblich der Abstand zum unmittelbar vorausfahrenden Fahrzeug 13. Das heißt, dass die Steuerungseinrichtung 3 letztlich wesentlich "weiter vorausschaut" als bei bisher bekannten Regelsystemen. Nachdem sämtliche Informationspakete der Fahrzeuge 13 - 17 als Basis für die Ermittlung der Regelstrategie, die die Steuerungseinrichtung 3 darauf gestützt ermittelt, dienen, kann folglich ein der tatsächlichen Verkehrssituation angepasster weil wesentlich weiter vorausschauender Regelungsbetrieb erreicht werden.

Es sei angenommen, dass die in Fig. 2 gezeigte Verkehrssituation eine Fahrt im häufig stockenden Verkehr darstellt, wobei alle Kraftfahrzeuge 1 und 13 - 17 langsam fahren. Bremst nun das Kraftfahrzeug 17, weil die davor befindlichen Fahrzeuge stehen, so wird dies unmittelbar seitens des Kraftfahrzeugs 1 erfasst. Nachdem damit zu rechnen ist, dass in Kürze auch die Fahrzeuge 16, 15, 14 und 13 bremsen und zwangsläufig auch das eigene Kraftfahrzeug bremsen muss, kann nun die Steuerungseinrichtung 3 das eigene Fahrzeug bereits vorzeitig sanft abbremsen respektive über das Motorschleppmoment verzögern, so dass es nicht zu einem mehr oder weniger abrupten Bremsvorgang kommen muss, was der Fall wäre, wenn lediglich erfasst wird, dass das Fahrzeug 13 mehr oder weniger abrupt in den Stand bremsen muss. Es wird also zu einem früheren Zeitpunkt langsam und gleichförmig verzögert, anders als bisher. Zur Verzögerung wird, verbrauchsreduzierend, bevorzugt das Motorschleppmoment ausgenutzt, denkbar ist dabei aber auch, nachdem aus dem Navigationssystem 10 Informationen über den Fahrbahnverlauf vorliegen, eine etwaige Steigung zur Verzögerung zusätzlich zu nutzen.

Es sei in einem anderen Beispielsfall angenommen, dass die Fahrzeuge 13 und 14 stehen, dass die Fahrzeuge 16 und 17 bereits wieder fahren und dass das Fahrzeug 15 gerade anfährt. Auch diese Informationen werden über die Parameter dₓ, vₓ und aₓ zu jedem der Kraftfahrzeuge 13 - 17 erfasst. Fährt in einer solchen Situation das eigene Kraftfahrzeug 1 langsam in Richtung des noch stehenden Fahrzeugs 13, so kann die Steuerungseinrichtung 3 das eigene Kraftfahrzeug durch Eingriff in die Motorsteuerung 4 respektive das Bremssystem 6 so steuern, dass es nicht zu einem vollständigen Stopp kommt, da ja bekannt ist, dass das Fahrzeug 15 gerade wieder angefahren ist und damit zu rechnen ist, dass auch die Fahrzeuge 14 und 13 in aller nächster Zeit wieder anfahren. Hierüber kann also ein unnötiges Bremsen in den Stand vermieden werden, vielmehr wird das Fahrzeug so verzögert und rechtzeitig wieder beschleunigt, dass ein gleichförmiges, stoppfreies Fahren möglich ist. Um eine verbrauchsarme und damit schadstoffreduzierte Beschleunigung zu ermöglichen, können hierbei wie auch in anderen Situationen wiederum die Informationen aus dem Navigationssystem ermittelt werden. Ist nämlich ein ausreichend großes Gefälle gegeben und ist der Rollwiderstand nicht zu groß, so kann dies für eine Beschleunigungsanforderung genutzt werden. Das heißt, dass letztlich das Gefälle zur Fahrzeugbeschleunigung zusätzlich genutzt wird und im Endeffekt der Motor nicht so stark beschleunigen muss, wie dies auf einer ebenen Strecke der Fall wäre.

Ein etwaiges Gefälle wird insbesondere bei etwaigem Stop&Go-Verkehr ausgenutzt. Fährt beispielsweise das Fahrzeug 14 an, steht jedoch das Fahrzeug 15 und entsprechend auch die Fahrzeuge 16 und 17 bereits wieder, so ist zum einen mit einem kurz darauf folgenden Anfahren auch des Fahrzeugs 13 zu rechnen, zum anderen aber auch mit einem unmittelbaren Stopp des Fahrzeugs 14 und resultierend auch des Fahrzeugs 13 kurz darauf. Das eigene Kraftfahrzeug kann die entstehende Lücke ohne eigene motorseitige Beschleunigung schließen, indem es lediglich das Gefälle ausnutzt und nach vorne rollt. Auch diese Art der Längsregelung ist nur möglich, nachdem die vorher fahrenden mehreren Fahrzeuge überwacht beziehungsweise Informationen von diesen ermittelt werden.

## Patentansprüche

1. Verfahren zur automatischen Längsführung eines Kraftfahrzeugs umfassend ein adaptives Längsführungssystem (ACC-System), wobei seitens einer Steuerungseinrichtung des Längsführungssystems Informationen betreffend die Abstände zu mehreren vorausfahrenden Kraftfahrzeugen, betreffend die jeweiligen Geschwindigkeiten dieser Kraftfahrzeuge und die jeweilige Beschleunigung dieser Kraftfahrzeuge erfasst wird und in Abhängigkeit der erfassten Informationen sowie der erfassten Beschleunigungen die Längsführung des Kraftfahrzeugs erfolgt, wobei im Rahmen der Informationsverarbeitung anhand der erfassten Informationen betreffend die jeweilige Geschwindigkeit der vorausfahrenden Kraftfahrzeuge ein Rechenwert, der ein Maß für die Bewegung der aus den vorausfahrenden Kraftfahrzeugen gebildeten Kolonne ist, ermittelt wird, der im Rahmen der Steuerung berücksichtigt wird,
**dadurch gekennzeichnet,**
**dass** als Rechenwert der Mittelwert gebildet wird, um zu ermitteln, wie schnell sich die Kolonne im Mittel bewegt.

2. Verfahren nach Anspruch 1,
**dadurch gekennzeichnet,**
**dass** die Informationen zu wenigstens drei, insbesondere zu wenigstens fünf vorausfahrenden Kraftfahrzeugen erfasst werden.

3. Verfahren nach Anspruch 1 oder 2,
**dadurch gekennzeichnet,**
**dass** die Steuerung derart erfolgt, dass zum unmittelbar vorausfahrenden Kraftfahrzeug unabhängig von den erfassten Informationen immer ein Mindestabstand eingehalten wird.

4. Verfahren nach einem der vorangehenden Ansprüche,
**dadurch gekennzeichnet,**
**dass** die Informationen mittels kraftfahrzeugseitig vorgesehener Radarsensoren und/oder mittels einer kraftfahrzeugseitig vorgesehenen Empfangseinrichtung, die eine Kommunikation zu einer externen Informationsübertragungseinrichtung ermöglicht, erfasst werden.

5. Verfahren nach einem der vorangehenden Ansprüche,
**dadurch gekennzeichnet,**
**dass** anhand wenigstens einer Information, die ein Maß für die zukünftige Fahrstrecke des Kraftfahrzeugs darstellt, die zukünftige Fahrstrecke und daraus resultierend ein Streckenkorridor ermittelt wird, in dem sich die vorausfahrenden Kraftfahrzeuge befinden.

6. Verfahren nach Anspruch 5,
**dadurch gekennzeichnet,**
**dass** als Information wenigstens ein Betriebsparameter des Kraftfahrzeugs, insbesondere die Gierrate oder der Radwinkel, und/oder prädikative Streckendaten und/oder mittels einer das Fahrzeugvorfeld erfassenden Kamera aufgenommene Bilddaten erfasst und verarbeitet werden.

7. Verfahren nach einem der vorangehenden Ansprüche,
**dadurch gekennzeichnet,**
**dass** die Steuerung des Kraftfahrzeugs über das Längsführungssystem im Fall einer Beschleunigung unter Berücksichtigung des beschleunigungsbedingten Schadstoffausstoßes, insbesondere des CO₂-Ausstoßes erfolgt.

8. Verfahren nach einem der vorangehenden Ansprüche,
**dadurch gekennzeichnet,**
**dass** die Steuerung des Kraftfahrzeugs über das Längsführungssystem unter Berücksichtigung des Fahrbahnverlaufs erfolgt.

9. Kraftfahrzeug umfassend ein adaptives Längsführungssystem (2) mit einer Steuerungseinrichtung (3), wobei seitens der Steuerungseinrichtung (3) Informationen betreffend die Abstände zu mehreren vorausfahrenden Kraftfahrzeugen (13, 14, 15, 16, 17), betreffend die jeweiligen Geschwindigkeiten dieser Kraftfahrzeuge (13, 14, 15, 16, 17) und die jeweilige Beschleunigung dieser Kraftfahrzeuge (13, 1, 15, 16, 17) erfassbar sind und das Kraftfahrzeug (1) in Abhängigkeit der erfassten Informationen sowie der erfassten Beschleunigungen längsführbar ist, wobei das Längsführungssystem (2) derart eingerichtet ist, dass im Rahmen der Informationsverarbeitung anhand der erfassten Informationen betreffend die jeweilige Geschwindigkeit der vorausfahrenden Kraftfahrzeuge ein Rechenwert, der ein Maß für die Bewegung der aus den vorausfahrenden Kraftfahrzeugen gebildeten Kolonne ist, ermittelt wird, der im Rahmen der Steuerung berücksichtigt wird,
**dadurch gekennzeichnet,**
**dass** als Rechenwert der Mittelwert gebildet wird, um zu ermitteln, wie schnell sich die Kolonne im Mittel bewegt.

10. Kraftfahrzeug nach Anspruch 9,
**dadurch gekennzeichnet,**
**dass** die Steuerungseinrichtung (3) zur differenzierten Erfassung von Informationen zu wenigstens drei, insbesondere zu wenigstens fünf vorausfahrenden Kraftfahrzeugen (13, 14, 15, 16, 17) ausgebildet ist.

11. Kraftfahrzeug nach Anspruch 9 oder 10,
**dadurch gekennzeichnet,**
**dass** die Steuerungseinrichtung (3) derart ausgebildet ist, dass zum unmittelbar vorausfahrenden Kraftfahrzeug (13) unabhängig von den erfassten Informationen immer ein Mindestabstand eingehalten wird.

12. Kraftfahrzeug nach einem der Ansprüche 9 bis 11,
**dadurch gekennzeichnet,**
**dass** kraftfahrzeugseitig zur Ermittlung der Informationen Radarsensoren (7) und/oder eine Empfangseinrichtung (8), die eine Kommunikation zu einer externen Informationsübertragungseinrichtung ermöglicht, vorgesehen sind.

13. Kraftfahrzeug nach einem der Ansprüche 9 bis 12,
**dadurch gekennzeichnet,**
**dass** die Steuerungseinrichtung (3) zur Ermittlung der zukünftigen Fahrstrecke und daraus resultierend eines Streckenkorridors, in dem sich die vorausfahrenden Kraftfahrzeuge (13, 14, 15, 16, 17) befinden, anhand wenigstens einer Information, die ein Maß für die zukünftige Fahrstrecke des Kraftfahrzeugs (1) darstellt, ausgebildet ist.

14. Kraftfahrzeug nach Anspruch 13,
**dadurch gekennzeichnet,**
**dass** als Information wenigstens ein Betriebsparameter des Kraftfahrzeugs (1), insbesondere die Gierrate oder der Radwinkel, und/oder prädikative Streckendaten und/oder mittels einer das Fahrzeugvorfeld erfassenden Kamera aufgenommene Bilddaten erfasst und verarbeitet werden.

## Claims

1. Method for automatically longitudinally guiding a motor vehicle, comprising an adaptive longitudinal guiding system (ACC or adaptive cruise control system), wherein a control means of the longitudinal guiding system detects information relating to the distances from a plurality of motor vehicles driving ahead, relating to the respective speeds of said motor vehicles and the respective accelerations of said motor vehicles, and the motor vehicle is longitudinally guided according to the detected information and the detected accelerations, wherein in the context of the processing of the information on the basis of the detected information respecting the respective speed of the preceding motor vehicles a calculation value is determined, which is a value for the movement of the platoon formed by the motor vehicles driving ahead, which is taken into account for the purposes of the control,
**characterised in**
**that** the calculation value is formed by the average value, in order to determine how fast the platoon is moving on average.

2. Method according to claim 1,
**characterised in**
**that** information relating to at least three, more particularly at least five motor vehicles driving ahead is detected.

3. Method according to claim 1 or 2,
**characterised in**
**that** the control is carried out in such a way that a minimum distance is always maintained from the vehicle driving directly ahead, irrespective of the information detected.

4. Method according to any of the preceding claims,
**characterised in**
**that** the information is detected by means of radar sensors provided on the motor vehicle and/or by means of a receiver provided on the motor vehicle, which allows communication with an external information transfer means.

5. Method according to any of the preceding claims,
**characterised in**
**that** on the basis of at least one item of information, which represents a measurement of the future route of the motor vehicle, the future route and a route corridor, in which the motor vehicles driving ahead are located, resulting from said route is determined.

6. Method according to claim 5,
**characterised in**
**that**, as information, at least one operating parameter of the motor vehicle, in particular the yaw rate or the wheel angle, and/or predictive route data and/or image data acquired by means of a camera detecting the region ahead of the vehicle are detected and processed.

7. Method according to any of the preceding claims,
**characterised in**
**that** the motor vehicle is controlled by means of the longitudinal guiding system in the event of an acceleration, taking into account the emission of hazardous substances, more particularly the emission of CO₂, as a result of acceleration.

8. Method according to any of the preceding claims,
**characterised in**
**that** the motor vehicle is controlled by means of the longitudinal guiding system taking into account the course of the road.

9. Motor vehicle comprising an adaptive longitudinal guiding system (2) comprising a control means (3), wherein the control means (3) can detect information relating to the distances from a plurality of motor vehicles (13, 14, 15, 16, 17) driving ahead, relating to the respective speeds of said motor vehicles (13, 14, 15, 16, 17) and the respective accelerations of said motor vehicles (13, 1, 15, 16, 17), and the motor vehicle (1) can be longitudinally guided according to the detected information and the detected accelerations, wherein the longitudinal guiding system (2) is configured such that in the context of the processing of the information on the basis of the detected items of information respecting the respective speed of the preceding motor vehicles a calculation value is determined, which is a value for the movement of the platoon formed by the motor vehicles driving ahead, which is taken into account for the purposes of the control,
**characterised in**
**that** the calculation value is formed by the average value, in order to determine how fast the platoon is moving on average.

10. Motor vehicle according to claim 9,
**characterised in**
**that** the control means (3) is designed to detect in a differentiated manner information relating to at least three, more particularly at least five motor vehicles (13, 14, 15, 16, 17) driving ahead.

11. Motor vehicle according to claim 9 or 10,
**characterised in**
**that** the control means (3) is designed such that a minimum distance is always maintained from the motor vehicle (13) driving directly ahead, irrespective of the information detected.

12. Motor vehicle according to any of claims 9 to 11,
**characterised in**
**that** radar sensors (7) and/or a receiver (8) which allows communication with an external information transfer means, are provided on the motor vehicle in order to detect the information.

13. Motor vehicle according to any of claims 9 to 12,
**characterised in**
**that** the control means (3) is designed to detect the future route and a route corridor, in which the motor vehicles (13, 14, 15, 16, 17) driving ahead are located, resulting from said route, on the basis of at least one item of information which represents a measurement of the future route of the motor vehicle (1).

14. Motor vehicle according to claim 13,
**characterised in**
**that**, as information, at least one operating parameter of the motor vehicle (1), in particular the yaw rate or the wheel angle, and/or predictive route data and/or image data acquired by means of a camera detecting the region ahead of the vehicle are detected and processed.

## Revendications

1. Procédé de guidage longitudinal automatique d'un véhicule automobile comprenant un système de guidage longitudinal adaptatif (système ACC), dans lequel on recueille, au regard d'un dispositif de commande du système de guidage longitudinal, des informations concernant les distances à plusieurs véhicules automobiles circulant devant, concernant les vitesses respectives de ces véhicules automobiles et l'accélération respective de ces véhicules automobiles et l'on assure le guidage longitudinal du véhicule automobile en fonction des informations recueillies ainsi que des accélérations recueillies, dans lequel l'on détermine, dans le cadre du traitement des informations sur la base des informations recueillies concernant la vitesse respective des véhicules automobiles circulant devant, une valeur de calcul qui est une mesure pour le déplacement de la colonne formée des véhicules circulant devant, qui est prise en compte dans le cadre de la commande,
**caractérisé en ce que** :
l'on forme comme valeur de calcul la valeur moyenne pour déterminer à quelle vitesse la colonne se déplace en moyenne.

2. Procédé selon la revendication 1,
**caractérisé en ce que** :
les informations sont recueillies pour au moins trois, en particulier pour au moins cinq véhicules automobiles circulant devant.

3. Procédé selon la revendication 1 ou 2,
**caractérisé en ce que** :
la commande se fait en respectant toujours une distance minimale avec le véhicule automobile qui se déplace directement devant, indépendamment des informations recueillies.

4. Procédé selon l'une quelconque des revendications précédentes,
**caractérisé en ce que** :
les informations sont recueillies au moyen de capteurs radar prévus côté véhicule automobile et/ou au moyen d'un dispositif de réception prévu côté véhicule automobile, qui permet une communication avec un dispositif externe de transmission d'informations.

5. Procédé selon l'une quelconque des revendications précédentes,
**caractérisé en ce que** :
sur la base d'au moins une information, qui représente une mesure pour le trafic futur du véhicule automobile, on détermine le trafic futur et, par suite, un corridor de circulation dans lequel les véhicules automobiles circulant devant se trouvent.

6. Procédé selon la revendication 5,
**caractérisé en ce que** :
l'on recueille et l'on traite comme informations au moins un paramètre d'exploitation du véhicule automobile, en particulier la vitesse de lacet ou l'angle de braquage et/ou des données de trafic prédictives et/ou des données d'image reçues au moyen d'une caméra captant l'avant-plan.

7. Procédé selon l'une quelconque des revendications précédentes,
**caractérisé en ce que** :
dans le cas d'une accélération, la commande du véhicule automobile se fait via le système de guidage longitudinal en tenant compte du rejet de polluants dû à l'accélération, en particulier du rejet de CO₂.

8. Procédé selon l'une quelconque des revendications précédentes,
**caractérisé en ce que** :
la commande du véhicule automobile se fait via le système de guidage longitudinal en tenant compte du tracé de la chaussée.

9. Véhicule automobile comprenant un système de guidage longitudinal adaptatif (2) avec un dispositif de commande (3), dans lequel on peut recueillir, au regard du dispositif de commande (3), des informations concernant les distances à plusieurs véhicules automobiles (13, 14, 15, 16, 17) circulant devant, concernant les vitesses respectives de ces véhicules automobiles (13, 14, 15, 16, 17) et l'accélération respective de ces véhicules automobiles (13, 1, 15, 16, 17) et l'on peut procéder au guidage longitudinal du véhicule automobile (1) en fonction des informations recueillies ainsi que des accélérations recueillies, dans lequel le système de guidage longitudinal (2) est conçu de manière à déterminer, dans le cadre du traitement des informations sur la base des informations recueillies concernant la vitesse respective des véhicules automobiles circulant devant, une valeur de calcul qui est une mesure pour le déplacement de la colonne formée des véhicules circulant devant, qui est prise en compte dans le cadre de la commande,
**caractérisé en ce que** :
l'on forme comme valeur de calcul la valeur moyenne pour déterminer à quelle vitesse la colonne se déplace en moyenne.

10. Véhicule automobile selon la revendication 9,
**caractérisé en ce que** :
le dispositif de commande (3) est conçu pour la collecte différenciée d'au moins trois, en particulier d'au moins cinq véhicules automobiles (13, 14, 15, 16, 17) circulant devant.

11. Véhicule automobile selon la revendication 9 ou 10,
**caractérisé en ce que** :
le dispositif de commande (3) est conçu de sorte que soit toujours respectée une distance minimale avec le véhicule automobile (13) qui se déplace directement devant, indépendamment des informations recueillies.

12. Véhicule automobile selon l'une quelconque des revendications 9 à 11,
**caractérisé en ce que** :
il est prévu côté véhicule automobile pour la collecte des informations des capteurs radar (7) et/ou un dispositif de réception (8), qui permet une communication avec un dispositif externe de transmission d'informations.

13. Véhicule automobile selon l'une quelconque des revendications 9 à 12,
**caractérisé en ce que** :
le dispositif de commande (3) est conçu pour déterminer le trafic futur et, par suite, un corridor de circulation dans lequel les véhicules automobiles (13, 14, 15, 16, 17) circulant devant se trouvent, sur la base d'au moins une information, qui représente une mesure pour le trafic futur du véhicule automobile (1).

14. Véhicule automobile selon la revendication 13,
**caractérisé en ce que** :
l'on recueille et l'on traite comme informations au moins un paramètre d'exploitation du véhicule automobile (1), en particulier la vitesse de lacet ou l'angle de braquage et/ou des données de trafic prédictives et/ou des données d'image reçues au moyen d'une caméra captant l'avant-plan.
